# EUROPEAN PATENT APPLICATION

(11) **EP 1 612 020 A2**
(43) Date of publication of application: **04.01.2006**
(21) Application number: 05014235.5
(22) Date of filing: 30.06.2005
(51) Int. Cl.: B29B 7/90, C08L 97/02, C08K 3/38

(54) **Method for producing resin composition containing natural material filler, and resin composition produced by the method**

(30) Priority: 30.06.2004 JP 2004194373
(71) Applicant: FA. M INC., Osaka-shi, Osaka 547-0001 (JP)
(72) Inventor: Miyama, Shigetoshi c/o fa.M Inc.,, Osaka-shi, Osaka 547-0001 (JP); Okada, Yuichi c/o fa.M Inc.,, Osaka-shi, Osaka 547-0001 (JP)
(74) Representative: Vossius & Partner

(57) **Abstract**

In a method for producing a natural material filler-containing resin composition by kneading a resin and a natural material filler, the kneading is carried out in the presence of a boron compound. The natural material filler may be treated with the boron compound preliminarily before the kneading. The natural material filler-containing resin composition that makes it possible to avoid blackening even if the kneading is carried out at a high temperature provides, when being molded, resin products that exhibit excellent natural-material-like texture.

## Description

The present invention relates to a method for producing a resin composition containing a filler based on a natural material, and a resin composition obtained through the foregoing method.

Recently, as the terrestrial environment issues have arisen, a variety of resin compositions containing fillers based on natural materials (hereinafter referred to as natural material fillers) have received attention. Examples of such resin compositions include those obtained by kneading natural material fillers such as wood chips, wood flour, bamboo flour, pulp made from wastepaper and waste magazines, etc. together with various conventional thermoplastic resins (including biodegradable resins, recycled (regenerated) resins, etc.) as bases. Resin products made of such resin compositions provide the feeling, appearance, touch and the like similar to those of wood, bamboo, plant fibers, etc., and therefore have an advantage of providing excellent natural-material-like textures. Further, such resin products have moldability and strength beyond certain levels and are producible on a larger scale, while having advantages of saving resources and having excellent disposability and recyclability, etc.

Such resin compositions conventionally have been produced by kneading various resins and natural material fillers, as well as additives as required, at a high temperature, forming the same in a strand form, and cutting the same in a pellet form. However, it has been known that during the kneading at a high temperature, blackening (so-called burning) of a natural material filler tends to occur, along with odor. If the blackening of a natural material filler occurs, there are problems as follows: a resin product formed with the resin composition assumes a blackened color, thereby having degraded appearance, touch, and the like; there is a difficulty in forming strands during kneading; and a strength of resin products formed with the foregoing resin composition decreases.

One of the methods for suppressing the occurrence of the blackening is to decrease the kneading temperature. However, since resins of certain types are not sufficiently molten when the kneading temperature decreases, the use of a resin of such a type has caused inconveniences such that kneading is unsmooth and that the kneading speed decreases significantly since a rotation speed of a screw of the kneader cannot be increased.

Then, as a method for suppressing the occurrence of blackening without decreasing the kneading temperature, methods have been proposed (see, for instance, JP-A-10(1998)-166355, and JP-A-2003-80584) that require specific kneading apparatuses.

However, these methods have a problem that only a kneading temperature approximately in a range of 220°C to 230°C, which is relatively low, can be used.

Besides, other methods that do not decrease the kneading temperature have been proposed, such as a method that employs a resin composition containing a ligneous material, a thermoplastic resin, and an aqueous film-formable inorganic compound (see, for instance, JP-A-9(1997)-104010), and a method that employs a kneaded matter obtained by kneading a PET resin, a lubricant, and a heat resisting cellulose powder obtained by impregnating a cellulose powder with a flame retardant (see, for instance, JP-A-9(1997)-183121).

However, these methods only provided a poor effect of suppressing the blackening of natural material fillers.

Therefore, it is an object of the present invention to provide a method for producing a resin composition containing a natural material filler, which resin composition has the property of avoiding the blackening of the natural material filler even if kneaded at a high temperature, thereby avoiding and suppressing the blackening of a resin product obtained therefrom, and the prevention of a decrease in the strength thereof.

To achieve the aforementioned object, a method of the present invention is a method for producing a resin composition containing a resin and a natural material filler, which method includes a kneading step for kneading the resin and the natural material filler, and the kneading step is carried out in the presence of a boron compound so as to avoid the natural material filler from being blackened.

The producing method of the present invention makes it possible to produce a resin composition containing a natural material filler that avoids the blackening of the natural material filler even if kneaded at a high temperature, thereby avoiding and suppressing the blackening of a resin product obtained, and preventing a decrease in the strength thereof. It should be noted that the kneading may be carried out at a low temperature in the present invention. ,

The inventors of the present invention found that a boron-containing compound provides a blackening avoiding effect, and completed the present invention based on the foregoing findings. The blackening avoiding effect is deemed to be derived from a mechanism different from a conventional flame retarding effect.

It should be noted that the "avoidance of blackening" implies states in a range from a state in which slight blackening was observed in the natural material filler, and the resin composition as a whole had a slight change in color, but these were judged to be at levels such that would present no problem practically, to a state in which substantially no change in color was observed in the natural material filler, and substantially no change in color was observed in the resin composition as a whole, either.

Hereinafter, the present invention will be described by way of embodiments, but the present invention is not limited to the embodiments and all changes are allowed as long as they do not go out of the scope of the spirit of the present invention. The following will describe the embodiments of the present invention specifically.

First of all, the boron compound is described. The boron compound used in the present invention is not limited specifically as long as it contains boron. Examples of the boron compound include boric acids, borates, tetrahydroborates, tetrafluoroborates, cyanotrihydroborates, and boron oxides. Examples of the boric acids include metaboric acid (HBO₂), orthoboric acid (H₃BO₃), and tetraboric acid. Examples of the borates include salts of oxoacids of boric acids, such as sodium metaborate tetrahydrate, magnesium borate, hydrated magnesium borate, anhydrous sodium tetraborate, sodium tetraborate octahydrate, sodium tetraborate decahydrate (borax, Na₂[B₂O₅(OH)₄]·8H₂O), sodium tetraborate pentahydrate, ammonium borate, ammonium borate octahydrate, ammonium tetraborate tetrahydrate, dipotassium tetraborate tetrahydrate, lithium tetraborate pentahydrate, and zinc borate. Examples of the tetrahydroborates include potassium tetrahydroborate, and sodium tetrahydroborate. Examples of the tetrafluoroborates include ammonium fluoroborate, tetrafluoroboric acid, nickel (II) tetrafluoroborate, iron (II) tetrafluoroborate, sodium tetrafluoroborate, and lithium tetrafluoroborate (anhydrous). Examples of the cyanotrihydroborates include sodium cyanohydroborate. The above-described boron compounds may be used alone or in combination of two or more. As described above, anhydrides and hydrates of the foregoing boron compounds may be contained as the boron compounds.

Among the foregoing boron compounds, combinations of boric acids and sodium tetraborates (including anhydrous sodium tetraborate, sodium tetraborate octahydrate, sodium tetraborate decahydrate (borax), and sodium tetraborate pentahydrate, etc.), as well as combinations of boric acids and sodium metaborate tetrahydrate are preferable. Here, the weight ratio between a boric acid and sodium tetraborate or sodium metaborate tetrahydrate that are used is not limited particularly, but the weight of a sodium tetraborate or sodium metaborate tetrahydrate is, for instance, not less than 0.1 time, and preferably 0.3 time to 9.0 times, the weight of a boric acid. In the foregoing combinations, orthoboric acid is more preferable as the boric acid, while anhydrous sodium tetraborate and sodium tetraborate decahydrate are more preferable as the sodium tetraborate. As the foregoing combination, a combination of orthoboric acid and at least one selected from the group consisting of anhydrous sodium tetraborate, sodium tetraborate decahydrate (borax), and sodium metaborate tetrahydrate is preferable, and either a combination of orthoboric acid and anhydrous sodium tetraborate or a combination of orthoboric acid and sodium tetraborate decahydrate is more preferable.

Next, the natural material filler is described. Examples of the natural material filler used in the present invention include ground bamboo, ground tea leaves, ground *wasabi* horseradish, ground soybean residues, ground red pepper, ground black pepper, ground *matsutake* mushroom (pine mushroom), ground *shiitake* mushroom (Chinese mushroom), wood flour, ground paper, ground tea dregs, ground coffee residues, carbon black, talc, ground wood charcoal, ground bamboo charcoal, and ground cacao shells. Examples of the natural material filler include those unground.

As the natural material filler, in order to obtain resin products having excellent wood-like texture, the wood flour is used preferably. An average particle diameter of the foregoing natural material filler is, for example, 10 µm to 500 µm, preferably 30 µm to 300 µm, and more preferably 30 µm to 200 µm. This is because in the case where the average particle diameter is not less than 10 µm, a bulk density thereof increases, whereby ease of mixing is increased in the production of a resin composition. In the case where the average particle diameter is not more than 500 µm, an appearance of a resin product produced with the resin composition obtained by the producing method of the present invention is improved. It should be noted that the "average particle diameter" refers to a value derived in the following manner: powder is classified by sieves so as to plot a curve indicating cumulative percentages by weight with respect to the sieve opening sizes, and the "average particle diameter" refers to a sieve opening size corresponding to 50 percent by weight.

The resin used in the present invention is not limited particularly, but, for instance, a thermoplastic resin is preferable. The thermoplastic resin has a melting point or a softening point (a temperature above which thermoplasticity is obtained) of, for instance, 100°C to 350°C. The type of the thermoplastic resin is not limited particularly, but it preferably contains, for instance, at least one selected from the group consisting of:
polyolefins including polyethylene and polypropylene;
polyamides including aliphatic polyamides such as nylon-6, nylon-66, nylon-10, nylon-12, and nylon-46, as well as aromatic polyamides produced with aromatic dicarboxylic acid and aliphatic diamine;
polyesters including aromatic polyesters such as polyethylene terephthalate, polyethylene naphthalate, and polybutylene terephthalate, as well as polycaprolactone and polyhydroxybutyrate;
polyethylene terephthalate-based alloy resins such as polyethylene terephthalate/polyethylene-based alloy resins;
polyacetals such as polyformaldehyde (polyoxymethylene);
polystyrenes including a homopolymer of styrene, as well as styrene-acrylonitrile copolymer;
acrylonitrile-butadiene-styrene copolymer (ABS);
polymethacrylate;
polycarbonate;
modified polyphenylene ether-based resin;
poly(vinyl chloride);
poly(vinylidene chloride);
poly(vinyl acetate);
ethylene-(meth)acrylate ester copolymer;
polyimide;
polyether imide;
polyether ether ketone (polyphenylene ether phenylene ether phenylene ketone);
polysulfone;
polyether sulfone;
polyphenylene sulfide;
polytetrafluoroethylene; and
a variety of rubber-type resins including acrylic rubber, ethylene-α·olefin-based copolymer rubber, butadiene-styrene rubber (SBS), SEPS, and SEBS. The foregoing resins may be modified.

The producing method of the present invention allows kneading at a high temperature, and hence, it is possible to use, as the foregoing resin, a resin having a high melting point or softening point, such as a so-called engineering resin (for instance, polyamide, polyacetal, polybutylene terephthalate, polycarbonate, modified polyphenylene ether-based resin, etc.), a super engineering resin (for instance, polyphenylene sulfide, polyether ether ketone, polytetrafluoroethylene, polyether imide, polysulfone, polyether sulfone, etc.), or polyethylene terephthalate/polyethylene-based alloy resin.

The form of the foregoing resin is not limited particularly, and the resin may be in any form. For instance, in the case where the resin is PET, any type commercially available from the market can be used, for instance, those used for forming bottles, for injection molding, for forming fibers, films, sheets, etc. Apart from the same, unused pellet products can be used of course, and recycled (regenerated) products in flake, pellet, and powder forms, etc., such as those obtained from PET bottles typically, and products obtained through chemical recycling processes can be used, too. Thus, the form and the history of the usage and the recycling process of the resin are not limited.

It should be noted that in the case where the foregoing resin is required to have biodegradability, a biodegradable resin is used preferably. As the biodegradable resin, for instance, polyester-based biodegradable resins are preferable, polylactic biodegradable resins are more preferable, and polylactic acid and polyhydroxybutyrate are particularly preferable.

The resin used in the producing method of the present invention may be an unused product as described above, but for instance, it preferably contains a resin derived from a recycled (regenerated) material with a view to reducing the production cost and effectively utilizing resources. Examples of the resin derived from a recycled material include recycled products of polyolefins such as polypropylene, polyethylene terephthalate, polyester, modified polyphenylene ether-based resins, polycarbonate, acrylonitrile-butadiene-styrene copolymer (ABS), polyethylene terephthalate-based resins, and polyolefine-based resins, recycled products of polyethylene terephthalate-based alloy resins such as polyethylene terephthalate/polyethylene-based alloy resins, and recycled products of biodegradable resins such as polylactic acid.

The forms of the foregoing biodegradable resins and the resins derived from recycled materials are not limited particularly, and the resin may be in any form. For instance, in the case where the resin is PET, any type commercially available from the market can be used, for instance, those used for forming bottles, for injection molding, for forming fibers, films, sheets, etc. Apart from the same, unused pellet products can be used of course, and recycled (regenerated) products in flake, pellet, and powder forms, etc., such as those obtained from PET bottles typically, and products obtained through chemical recycling processes can be used, too. Thus, the form and the history of usage and recycling of the resin are not limited.

In the producing method of the present invention, in the step of kneading the foregoing resin and the foregoing natural material filler, it is preferable that at least one substance selected from the group consisting of phosphoric acids, salts of phosphoric acids, silicon dioxides, and ceramics is added further. This is because this substance improves the effects of the present invention such as the workability of the treatment of the natural material filler with use of a boron compound, the avoidance of the blackening, and the like. Examples of salts of phosphoric acids include dipotassium hydrogen phosphate, disodium hydrogen phosphate, ammonium phosphate, potassium dihydrogen phosphate, sodium dihydrogen phosphate, and sodium polyphosphate. Examples of silicon dioxides include silica and silica gel. Examples of the ceramics include molded items of inorganic compounds such as carbides, nitrides, and borides, and more specifically, magnesium-based organophosphorus-containing materials. The at least one selected from the group consisting of phosphoric acids, salts of phosphoric acids, silicon dioxides, and ceramics preferably is dissoluble in water, and, for instance, phosphoric acids are preferred.

In the producing method of the present invention, it is preferable to knead, for instance: the resin; the natural material filler; a boric acid and either any of sodium tetraborates (including anhydrous sodium tetraborate, sodium tetraborate octahydrate, sodium tetraborate decahydrate (borax), sodium tetraborate pentahydrate, etc.) or sodium metaborate tetrahydrate; and a phosphoric acid.

In the producing method of the present invention, components other than the foregoing resin, the natural material filler, and the boron compounds may be used as required. For instance, an additive appropriate to the purpose preferably is contained further, and it is more preferable that the foregoing additive contains an inorganic filler, for instance. By adding the additive, it is possible in some cases further to improve mechanical properties of a resin composition of the present invention, or improve an appearance, dimension accuracy, etc. of a molded item of the resin composition. Further, it also is possible to impart new functions, etc., such as paintability, flame retarding property, conductivity, and the like to the resin composition. The following describes the additives more specifically.

Examples of inorganic fillers applicable as the additives include talc, calcium carbonate, wollastonite, magnesium carbonate, calcium sulfate, barium sulfate, calcium oxide, aluminum oxide, titanium oxide, magnesium oxide, magnesium hydroxide, aluminum hydroxide, mica, glass fiber, glass flake, glass beads, carbon fiber, carbon black, ketchen black, acetylene black, CNT (carbon nanotube), graphite, silica, silica fiber, calcium silicate, aluminum silicate, kaolin, graphite fiber, aramid fiber, alumina fiber, silica-alumina fiber, metal powders, metal fibers, potassium titanate whisker, aluminum borate whisker, magnesium-based whiskers, silicon-based whiskers, sepiolite, asbestos, slag fiber, zonolite, gypsum fiber, zirconia fiber, boron nitride fiber, silicon nitride fiber, boron fiber, zirconium oxide, iron oxide, barium titanate, and white clay, which may be used alone or in combination of two or more. Magnesium hydroxide, aluminum hydroxide, etc., for instance, are suitable for the purpose of imparting the flame retarding property to a resin composition, while carbon black, ketchen black, acetylene black, CNT (carbon nanotube), carbon fiber, etc., for instance, are suitable for the purpose of imparting conductivity to a resin composition.

In using the above-described inorganic filler, a binder, a surface treating agent, or the like preferably is used as required in combination with the filler. Examples of the binder and the surface treating agent include functional compounds such as epoxy-based compounds, isocyanate-based compounds, silane-based compounds, and titanate-based compounds. This compound may be applied to an inorganic filler preliminarily whereby the filler is subjected to surface treatment, binding treatment, etc., or alternatively, they may be added upon kneading.

Apart from the foregoing additives, known additives normally added to resins may be used as required so that desired properties suitable for the purposes are imparted to a resin composition. Examples of such additives that can be added to resins include a variety of stabilizers such as antioxidants, processing stabilizers, light stabilizers, and UV absorbents, as well as flame retardants, plasticizers, softeners, lubricants, mold release agents, antistatic agents, impact modifier, colorants such as dies and pigments, crystallization accelerating agents, nucleating agents, preservatives, fungicides, and anti-termite agents. The colorants are not limited particularly, but to give examples of the same, the following can be used as the colorant: titanium dioxide, cobalt oxide, ultramarine blue, iron blue, red iron oxide, vermilion, white lead, red lead, chrome yellow, strontium chromate, titanium yellow, titanium black, zinc chromate, iron black, molybdate orange, molybdenum white, litharge, lithopone, carbon black, emerald green, guinget's green, cadmium yellow, cadmium red, cobalt blue, azo pigments, phthalocyanine blue, isoindolynone, quinacridon, dioxazine violet, perinone, and perylene. These colorants may be used alone or in combination of two or more. Among these, titanellow (titanium trioxide), red iron oxide (iron oxide), and the like are preferred so as to impart a natural-wood-like appearance.

Next, the producing method of the present invention is described while referring to specific examples.

The method of the present invention for producing a resin composition containing a natural material filler is characterized in that, as described above, in the producing method including a step of kneading the aforementioned resin and the aforementioned natural material filler, the kneading step is carried out in the presence of a boron compound in order to avoid the blackening of the natural material filler. The producing method of the present invention can be carried out in the following manner, for instance.

More specifically, the aforementioned resin, the aforementioned natural material filler, and the aforementioned boron compound are provided, and the resin and the natural material filler are kneaded in the presence of the boron compound. Here, a ratio of the boron compound to the natural material filler is, for instance, 0.1 to 500 parts by weight, preferably 1 to 300 parts by weights, and more preferably 5 to 200 parts by weight with respect to 100 parts by weight of the natural material filler.

It should be noted that prior to the step of treating the natural material filler with the boron compound, a step of determining an amount of the boron compound effective for avoiding the blackening may be performed additionally.

Further, a ratio of the resin to the natural material filler is not limited particularly, but it is, for instance, 10 to 1000 parts by weight, preferably 20 to 900 parts by weight, and more preferably 30 to 200 parts by weight with respect to 100 parts by weight of the natural material filler. The ratio of the resin in a range of 20 to 900 parts by weight is preferred from the standpoint of moldability, and mechanical properties of a resin composition obtained.

In the producing method of the present invention, in the case where at least one substance selected from the group consisting of phosphoric acids, esters of phosphoric acids, salts of phosphoric acids, silicon dioxides, and ceramics is added in the kneading step, an amount to be added is, for instance, 1 to 100 parts by weight, preferably 1 to 40 parts by weight, and more preferably 1 to 30 parts by weight with respect to 100 parts by weight of the boron compound.

A kneading temperature is not limited particularly, and it may be set appropriately so that the melting of respective components and the kneading of the same are accelerated smoothly. Regarding the set temperature, the inside of a cylinder or the like of a kneading machine upon kneading has a temperature in a range of, for instance, 100°C or above, preferably 100°C to 350°C, more preferably 180°C to 350°C, and further more preferably 240°C to 350°C. Accordingly, the kneading can be carried out at a temperature in a range of for instance, 100°C or above, preferably 180°C to 350°C, more preferably 180°C to 350°C, and further more preferably 240°C to 350°C.

A machine used for the kneading in the producing method of the present invention is not limited particularly, and examples of the same include a high-speed stirring-type mixer such as a roll kneader, a Banbury mixer, an intermixing machine, a single-screw extruder, a twin-screw extruder, and a Henschel mixer. Among these, a twin-screw extruder is preferable, and a twin-screw extruder having one or more apertures such as a vent (deaerating hole) is more preferable. One, or two or more, of the foregoing machines may be used. Further, in the case where the kneading machine is a continuous extrusion machine such as a twin-screw extruder, the machine may have any screw revolution per minute as long as the revolution is at a level such that all the components can be kneaded sufficiently, but it is, for instance, in a range of 20 revolutions per minute (rpm) to 1200 rpm, preferably 30 rpm to 1000 rpm, and more preferably 50 rpm to 1000 rpm.

In the producing method of the present invention, it is preferable that a step of treating the aforementioned natural material filler with use of the aforementioned boron compound is carried out before the kneading step. This is because this producing method improves the effect of avoiding the blackening of the resin composition obtained.

The foregoing treating step may be a step of impregnating the natural material filler with a solution of the boron compound. The impregnating step may be carried out, for instance, by stirring the solution of the boron compound while pouring the natural material filler into the same so that the impregnation is achieved, by adding the natural material filler into a solution of the boron compound and stirring the same so that the impregnation is achieved, or by adding the natural material filler into a solution of the boron compound and applying a pressure (for instance, under a pressure of 1 MPa) in a state in which the ground filler is soaked in the solution sufficiently so that the impregnation is achieved.

The foregoing impregnating step may be carried out by, for instance, a method disclosed in JP-A-2003-211412. In this method, the following treatments are carried out. Wood (natural material filler) (water content: 7%), for instance, is placed under a reduced pressure in an airtight pressure-adjusting vessel (reduced-pressure treatment), and the boron compound (for instance, borax and a boric acid) as well as an aqueous solution containing a phosphoric acid and an additive as required (for instance, heated to 80°C) are introduced into the vessel. The vessel is maintained under increased temperature and pressure so that the wood is impregnated with the boron compound (impregnating treatment), and thereafter, by repeating the drying treatment, the pressure-reducing treatment, and the impregnating treatment desired times, the natural material filler can be impregnated with the boron compound. Alternatively, instead of carrying out the impregnating step, a commercially available natural material filler impregnated with the boron compound may be obtained from the market.

After the impregnating step, a drying and grinding step of drying and grinding the natural material filler may be implemented. This is because the step improves the efficiency of the kneading step. The foregoing drying and grinding step is not limited particularly, but for instance, it may be carried out by a method conventionally known in the art. The foregoing drying and grinding step preferably is carried out before the kneading step and after the impregnating step.

The foregoing treating step may be either a step of causing the boron compound to adhere to the natural material filler, a step of coating the natural material filler with the boron compound, or a step of adding and mixing them. An example of the adhering step is a step of spraying a solution of the boron compound over the natural material filler so that the former adheres to the latter. An example of the adding and mixing step is a step of mixing the natural material filler, the resin, the boron compound, and a solvent. After the foregoing the adhering step, the coating step, or the adding and mixing step, the natural material filler is dried preferably.

A solvent for the boron compound solution to be used in the foregoing treating step is not limited particularly, but to give examples of the same, an organic solvent, water, and solvents obtained by mixing the same can be used as the solvent. Examples of the organic solvent include alcohols (methanol, ethanol, butanol, etc.), ethers (diethyl ether, etc.), ketones (acetone, etc.), esters (ethyl acetate, etc.), aliphatic hydrocarbons (n-hexane, etc.), and aromatic hydrocarbons (benzene, etc.). As the solvent, hydrophilic solvents are preferable, among which water, alcohols, and ketones, for instance, are preferable. Regarding the water, components contained therein and a temperature thereof are not limited particularly, and examples of the water include tap water, well water, industrial water, distilled water, drinking water, natural water, river water and lake water, spring water, and water vapor, any of which preferably contains as few impurities as possible. The foregoing solvents may be used alone or in mixture. As the foregoing solvent, a mixture of an alcohol and a water, for instance, is preferred.

In preparing the boron compound solution, a ratio between the boron compound and the solvent is not limited particularly, but a ratio of the solvent to 100 parts by weight of the boron compound is, for instance, 50 to 5000 parts by weight, preferably 100 to 3000 parts by weight, and more preferably 200 to 1000 parts by weight.

The boron compound solution may contain the aforementioned at least one substance selected from the group consisting of phosphoric acids, salts of phosphoric acids, silicon dioxides, ceramics, the aforementioned additive, a surfactant such as polyoxyethylene fatty ester, a permeate, and the like. The use of the boron compound solution containing such a surfactant and the like is preferred since the foregoing treatment is accelerated by the use of the same.

A pH of the boron compound solution is not limited particularly, but it preferably is in a range of 6 to 9, and more preferably in a range of 7 to 8. This is because in the case where the pH is in a range of 6 to 9, the blackening of the natural material filler in the resin composition obtained can be suppressed more surely. Besides, in the case where the pH is in a range of 6 to 9, it is possible to retard corrosion of a machine used for kneading. The pH may be adjusted to a desired level by adding an alkaline substance or an acidic substance. As such an acidic substance, a phosphoric acid is preferred.

In the foregoing treatment, a temperature of the boron compound solution is not limited particularly, but it preferably is in a range of normal temperature to high temperature, more preferably 40°C or above, and more preferably 80°C or above. This is because in the case where the temperature is in a range of normal temperature to high temperature, the foregoing treatment is accelerated.

The foregoing treatment in the producing method of the present invention more specifically may be carried out through the following step:
I) A boron compound and hot water are charged in a stirring-mixing vessel so as to be stirred and mixed sufficiently, whereby a boron compound aqueous solution is prepared. The solution is stirred while a natural material filler (preliminarily dried as required) is poured therein so that the natural material filler is impregnated with the solution. After the filler is permeated and impregnated sufficiently with the boron compound aqueous solution, the obtained powder of the filler is dried sufficiently by a dehumidifying drier, a hot-air drier, or the like;
II) A boron compound, hot water, and a natural material filler (preliminarily dried as required) are charged in a stirring-mixing vessel so as to be stirred and mixed sufficiently After the filler is permeated and impregnated sufficiently with the boron compound, the obtained powder of the filler is dried sufficiently by a dehumidifying drier, a hot-air drier, or the like;
III) A boron compound, hot water, and a natural material filler (preliminarily dried as required) are charged sequentially or simultaneously in a mixing machine such as a Henschel mixer or a tumbler, and subsequently they are stirred and mixed sufficiently. After the filler is permeated and impregnated sufficiently with the boron compound, the obtained powder of the filler is dried sufficiently by a dehumidifying drier, a hot-air drier, or the like;
IV) A boron compound and hot water are charged in a stirring-mixing vessel so as to be stirred and mixed sufficiently whereby a boron compound aqueous solution is prepared. Subsequently, the boron compound aqueous solution is sprayed in mist form by an atomizer over a natural material filler (preliminarily dried as required) in a manner such that the solution covers surfaces of the filler entirely, so as to adhere to the surfaces. Subsequently, the filler is dried sufficiently by a dehumidifying drier, a hot-air drier, or the like;
V) A boron compound, a natural material filler (preliminarily dried as required), and an alcohol are charged in a stirring-mixing vessel, and are stirred and mixed sufficiently until the obtained powder of the filler is gelated. After the boron compound and the powder are mixed sufficiently, the powder obtained is dried sufficiently by a dehumidifying drier, a hot-air drier, or the like;
VI) A boron compound and hot water are charged in a stirring-mixing vessel so as to be stirred and mixed sufficiently, whereby a boron compound aqueous solution is prepared. Subsequently, a natural material filler (preliminarily dried as required) and the foregoing aqueous solution are charged in a separate pressure vessel, and the pressure vessel as a whole is placed under a pressure of approximately 1 MPa in a state in which the obtained powder of the filler is soaked in the aqueous solution sufficiently, so that the filler is impregnated with the boron compound. After the filler is permeated and impregnated with the boron compound sufficiently, the powder of the filler is removed therefrom, and is dried sufficiently by a dehumidifying drier, a hot-air drier, or the like;
VII) A boron compound, hot water, and a natural material filler (preliminarily dried as required) are charged into a mixing machine such as a Henschel mixer or a tumbler that constitutes an integrated kneading apparatus (line) so as to be stirred and mixed sufficiently, whereby the obtained powder of the filler is permeated and impregnated with the boron compound. Thereafter, an additive and the like are added thereto, so that the mixing is carried out in one apparatus;
VIII) A boron compound, hot water, and a natural material filler (preliminarily dried as required) are charged sequentially or simultaneously into a mixer such as a Henschel mixer or a tumbler so as to be stirred and mixed sufficiently, whereby the obtained powder of the filler is permeated and impregnated sufficiently with the boron compound. The powder obtained is supplied to an extruder separately disposed, through one or more hole(s) such as vent(s) other than a material feeding hole of the extruder, at a predetermined constant rate; or
IX) A boron compound, hot water, and a natural material filler (preliminarily dried as required) are charged separately and sequentially by an (automatic) metering installation into a kneading machine through one or more hole(s) such as vent(s) other than a material feeding hole thereof, and the obtained powder of the filler is permeated and impregnated sufficiently with the boron compound by kneading in the inside of a heating cylinder of the kneading machine.

In the producing method of the present invention, a bulk density of the natural material filler having been subjected to the foregoing treating step preferably is greater than that of the natural material filler before being subjected to the treating step, more preferably not less than 1.2 times, further more preferably not less than 2 times. For instance, in the case where the treated natural material filler and the resin are kneaded, it is preferable that the bulk density of the natural material filler after the treating step is greater than that before the treating step since the operation efficiency and the mixing efficiency of a kneading machine are improved. Further, in the producing method of the present invention, the natural material filler having been subjected to the treating step and the untreated natural material filler not subjected to the treating step may be used in combination as required.

The resin composition of the present invention is the resin composition produced by the producing method of the present invention. As described above, the resin composition is characterized in that the blackening of the natural material filler can be avoided even if the kneading is carried out at a high temperature. The application of the resin composition of the present invention is not limited particularly, and can be applied widely in a variety of resin products.

The producing method of the present invention may include a molding step further. Examples of a molding step include extrusion molding, injection molding, hollow molding, film molding, compression molding, and vacuum forming. Among these, extrusion molding and injection molding are preferable, and the steps of extrusion molding and injection molding for molding a profile extrusion product and the like are more preferable as the foregoing molding step. A molded item obtained through such a molding step, that is, a resin product, is applicable as, for instance, construction materials such as frame materials, furniture, daily life implements, automobile parts, and the like. Through the molding step, an item molded in a desired shape such as a sheet form, a tube form, etc. can be obtained. The molding step preferably is carried out after the kneading step.

Further, the present invention provides a blackening inhibitor for inhibiting blackening of a natural material filler, which inhibitor contains the aforementioned boron compound. As the boron compound, the same ones as those described above can be used, and among these, the boron compound preferably is at least one selected from the group consisting of boric acids, borates, tetrahydroborates, tetrafluoroborates, cyanotrihydroborates, and boron oxides.

The producing method of the present invention enables the avoidance of the blackening of a natural material filler even if a resin and the natural material filler are kneaded at a high temperature. Therefore, the resin composition exhibits, for example, natural texture and the like that a natural material filler inherently possesses, whereas the strength of a resin product of the same does not deteriorate. Thus, the present invention provides excellent resin products, and such resin compositions are applicable in resin products having a variety of uses.

### Examples

The following describes examples of resin composition producing methods of the present invention and resin compositions obtained by the foregoing methods.

### [I] Materials:

Materials of resin compositions produced in the present examples are as follows.

### (1) Resin (Component A)

### A-1: polyethylene terephthalate / polyethylene-based alloy resin

The foregoing alloy resin was produced in the following manner. A PET resin produced by Mitsubishi Rayon Co., Ltd. (trade name: DIANITE KR582, intrinsic viscosity = 0.65 (at 25°C in orthochlorophenol), unused pellet) (amount: 67 parts by weight), linear polyethylene produced by Japan Polyethylene Corporation (trade name: UF440, melt flow rate (MFR) (at 190°C) = 1.7 g/min., unused pellet) (amount: 30 parts by weight), and a compatibilizer (ethylene glycidyl methacrylate (amount: 3 parts by weight), copolymer, pellet) were mixed sufficiently in a tumbler mixer preliminarily. While water at room temperature was poured into a material feed opening of a twin-screw extruder (trade name: BT30, manufactured by PLABOR Co., Ltd., screw diameter = 30 mm) at a rate of 2 parts by weight per hour, a mixture thus obtained was loaded at a constant rate in the twin-screw extruder, and was fused and kneaded (at 260°C). The mixture was granulated, whereby the intended alloy resin was obtained in a pellet form (melting point = 247°C).

It should be noted that the foregoing melting point was calculated from values measured by a differential scanning calorimeter "DSC-60" manufactured by Shimadzu Corporation. Lines tangent to a DSC curve obtained by the differential scanning calorimeter, at a point at which the DSC curve deviates from a base line, and at a point at which the rising of the curve toward its peak comes to have a stable inclination, were determined, and a crossing point of the foregoing tangent lines was regarded as the foregoing melting point.
MFR (280°C, 2.16 kg) = 2 g/10 min.

A-2: polyethylene terephthalate (trade name: DIANITE, produced by Mitsubishi Rayon Co., Ltd.)
melting point = 246°C
intrinsic viscosity = 0.71 (at 25°C in orthochlorophenol)

A-3: polyphenylene ether-based modified resin (trade name: Xylon, produced by Asahi Kasei Chemicals Corporation)
melting point = 253°C
MFR (300°C, 10 kg) = 33g/10 min.

A-4: polypropylene (trade name: NOVATEC, produced by Japan Polypropylene Corporation)
melting point = 156°C
MFR (230°C, 2.16 kg) = 3 g/10 min.

A-5: polylactic acid (produced by Cargill Dow LLC)
melting point = 164°C
MFR (230°C, 2.16 kg) = 3 g/10 min.

### (2) Natural material filler impregnated with boron compound (Component B)

B-1: First of all, hot water at 60°C (88.1 parts by weight), anhydrous sodium tetraborate (6.5 parts by weight), and orthoboric acid (5.4 parts by weight) were charged in a stirring-mixing vessel and subsequently were mixed sufficiently whereby an aqueous solution of boron compounds was prepared. The aqueous solution had a pH of 7.8.

Subsequently, the aqueous solution was stirred while pine wood flour made in the United States (average particle diameter = 78 µm, bulk density = 0.27 g/cm³) (natural material filler) (11 parts by weight with respect to 100 parts by weight of the aqueous solution) was poured therein so that the wood flour was impregnated with the foregoing boron compounds sufficiently. Thereafter, the flour was dried sufficiently by a hot-air drier, whereby a natural material filler impregnated with the boron compounds was obtained. In this case, regarding a substantial ratio between the boron compounds (anhydrous sodium tetraborate and orthoboric acid) and the natural material filler in the obtained natural material filler, the boron compounds were 108 parts by weight with respect to 100 parts by weight of the natural material filler. The powder obtained had a bulk density of 0.59 g/cm³.

B-2: Hot water at 60°C (88.1 parts by weight), anhydrous sodium tetraborate (7.5 parts by weight), orthoboric acid (4.0 parts by weight), and phosphoric acid (0.4 parts by weight) were charged in a stirring-mixing vessel and subsequently were mixed sufficiently whereby an aqueous solution of boron compounds (containing phosphoric acid) was prepared. The aqueous solution had a pH of 6.9.

Subsequently, the aqueous solution was stirred while cedar (Japanese cedar) wood flour made in Japan (average particle diameter = 61 µm) (13 parts by weight with respect to 100 parts by weight of the aqueous solution) was poured therein so that the wood flour was impregnated with the foregoing boron compounds sufficiently. Thereafter, the flour was dried sufficiently by a hot-air drier, whereby a natural material filler impregnated with the boron compounds was obtained. In this case, regarding a substantial ratio between the boron compounds (anhydrous sodium tetraborate and orthoboric acid) and the natural material filler in the obtained natural material filler, the boron compounds were 88 parts by weight with respect to 100 parts by weight of the natural material filler.

B-3: A natural material filler impregnated with boron compounds was obtained in the same manner as that of B-1 except that bamboo flour made in Japan (average particle diameter = 69 µm) was used in place of the pine wood flour made in the United States.

B-4: A natural material filler impregnated with boron compounds was obtained in the same manner as that of B-1 except that paper powder obtained by grinding paper for use with business machines (average particle diameter = 47 µm) was used in place of the pine wood flour made in the United States.

B-5: Pine wood flour made in the United States (average particle diameter = 78 µm), untreated, was used. The flour had a bulk density of 0.27 g/cm³.

B-6: Paper powder obtained by grinding paper for use with business machines (average particle diameter = 47 µm), untreated, was used.

### [II] Kneading machine:

The following kneading machine was used in the present examples. C2 (trade name): Labo Plastmill produced by Toyo Seiki Seisaku-sho, Ltd. BT30 (trade name): twin-screw extruder (screw diameter: 30 mm) produced by PLABOR Co., Ltd.

### [III] Method for evaluating the blackening of natural material filler upon kneading, and the degree of generated odor:

Resin compositions produced in the present examples were evaluated in the following manner.

The appearance of each resin composition after being kneaded by the Labo Plastmill (C2 (trade name)) (rotor revolution: 50 rpm) was visually inspected, while an odor generated during the kneading process was smelled, and the evaluation of the same was carried out as follows. The conditions for the kneading (temperature and time) are shown in Table 1. The amount kneaded was 50 g.

Excellent: Substantially no change in color was observed in the natural material filler, and substantially no change in color was observed in the resin composition as a whole, either. Further, substantially no odor was smelled. Good: Slight blackening was observed in the natural material filler, and the resin composition as a whole had a slight change in color, but these were judged to be at levels such that would present no problem practically. Besides, slight odor was smelled, which however was judged to be at a level such that would not adversely affect the workability and the environment. Poor: Considerable blackening was observed in the natural material filler, and the resin composition was remarkably blackened as a whole, whereby the resin composition lacked practical utility. Besides, considerable odor was smelled, which was judged to be at a level such that improvement was needed considering the workability and the environment.

Very poor: Significant blackening was observed in the natural material filler, and the resin composition was completely blackened as a whole, whereby the resin composition lacked practical utility at all. Besides, significant odor was smelled, which was judged to be at a level such that urgent improvement was needed considering the workability and the environment.

### (Production of resin compositions)

18 types of resin compositions were produced in the following manners, which were examples 1 to 11 and comparative examples 1 to 7. More specifically, raw material components for use in the production of the compositions were formulated at the ratios shown in Table 1 below, respectively. In Table 1, amounts of the components A and B are expressed by percent by weight (hereinafter referred to as wt%) with respect to a total weight of the components A and B. It should be noted that each amount, 20 wt%, of the components B-5 and B-6 in the comparative examples was two thirds of each amount, 30 wt%, of the components B-1 to B-4 in the examples. This is because the amounts were determined so that the volume of the natural material filler actually present in each of the components B-5 and B-6 was substantially equal to the volume of the natural material filler actually present in each of the components B-1 to B-4.

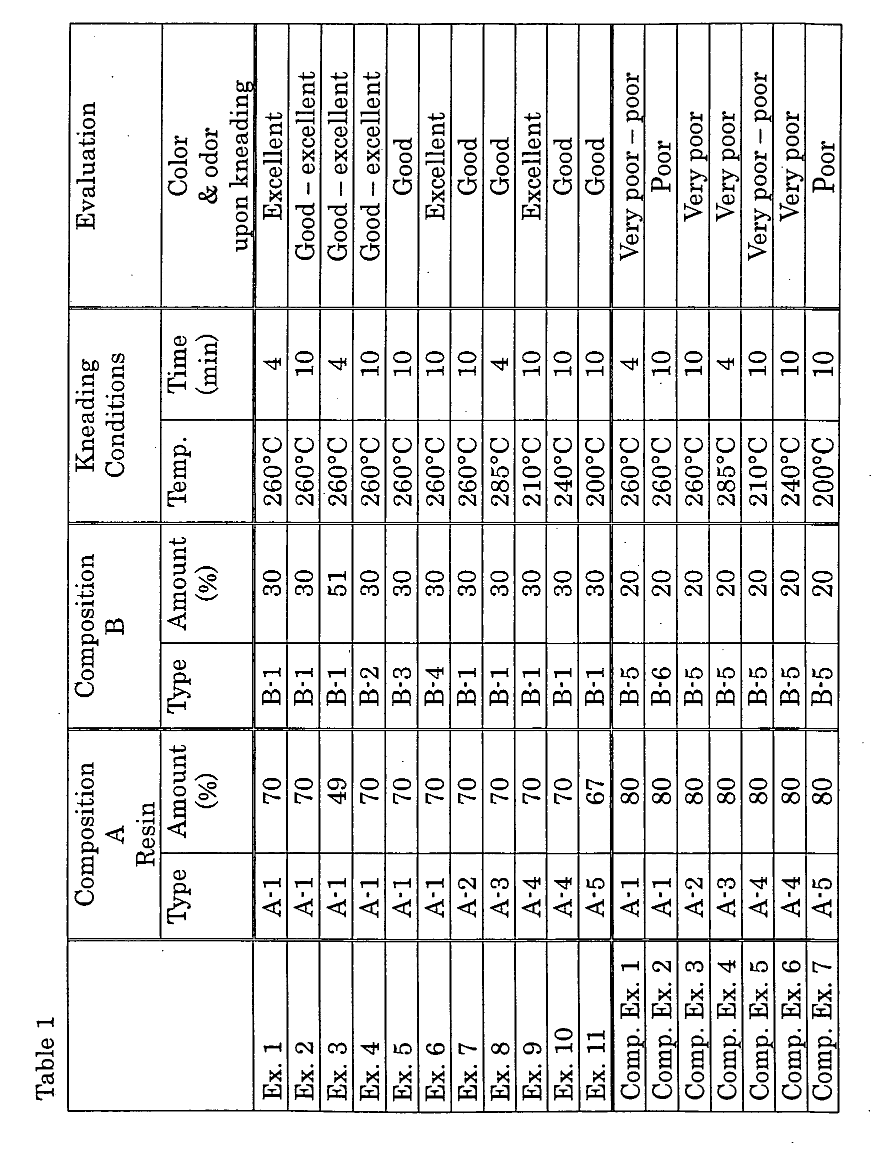

As shown in Table 1, it was confirmed from the results of Examples 1 to 11 that the resin compositions produced by the producing methods of the present invention were characterized in that the blackening of the resin compositions was suppressed even if the kneading was carried out at a high temperature.

### [IV] Mechanical strengths of resin compositions:

### Example 12

(i) Test piece preparation: The components A-1 and B-1 having the same compositions as those of Example 1 were kneaded by a twin-screw extruder (BT30 (trade name)), and were granulated (cylinder temperature: 260°C, screw revolution: 160 rpm). Here, predetermined amounts of the components A-1 and B-1 as the raw materials were supplied concurrently through separate material feeding holes by an automatic feeding device. The resin composition produced in this manner was molded in a JIS standard test specimen form (1A type of JIS-K7162, t=4mm), and physical property evaluations were carried out by using the test specimens thus formed. The test specimens were prepared by molding (molding temperature: 260°C, die temperature: 150°C) with use of an injection molding machine AN100 (trade name) produced by Niigata Iron Works Co., Ltd. The following tests were carried out using the obtained test specimens. As a result of the tests, the test pieces exhibited a tensile strength of 30 MPa, a tensile stretch of 4 %, a flexural strength of 45 MPa, a flexural elastic modulus of 2400 MPa, an Izod impact value of 31 J/m, and a load deflection temperature of 155°C (0.45 MPa).
(ii) Tensile strength and stretch: Measured by Strograph VE10D (trade name) produced by Toyo Seiki Seisaku-sho, Ltd. The measuring conditions were in accordance with JIS-K7176 and K7162, with a pulling speed of 50 mm/min, a temperature of 23°C, and a relative humidity of 50 %.
(iii) Flexural elastic modulus and flexural strength: Measured by Strograph VE10D (trade name) produced by Toyo Seiki Seisaku-sho, Ltd. The measuring conditions were in accordance with JIS-K7171, with a bending speed of 2 mm/min, a temperature of 23°C, and a relative humidity of 50 %.
(iv) Izod impact strength: Measured by Digital Impact Tester DG-UB (trade name) produced by Toyo Seiki Seisaku-sho, Ltd. The measuring conditions were in accordance with JIS-K7110, with notches, a temperature of 23°C, and a relative humidity of 50%.
(v) Load deflection temperature: Measured by Heat Distortion Tester 3M-2 (trade name) produced by Toyo Seiki Seisaku-sho, Ltd. The measuring conditions were in accordance with JIS-K7191.

### Example 13

The components A-1 and B-1 having the same compositions as those of Example 1 were kneaded by a twin-screw extruder (BT30 (trade name)), and were granulated (cylinder temperature: 260°C, screw revolution: 160 rpm). Here, predetermined amounts of the components A-1 and B-1 as the raw materials were supplied concurrently through separate material feeding holes by an automatic feeding device. The resin composition produced in this manner was molded by a profile extruder for vinyl chloride, whereby a model long-length plate as a construction material (approximate dimensions: 120 mm of width x 2 mm of average thickness) was obtained. The moldability was excellent, and the long-length plate obtained exhibited excellent wood-like appearance and texture, strength, and dimensional accuracy. Thus, the producing method of the present invention provides a resin product having excellent moldability

### Comparative Example 8

It was attempted to knead the components A-1 and B-5 having the same compositions as those of Comparative Example 1 by a twin-screw extruder (BT30 (trade name)) and granulate the same (cylinder temperature: 260°C, screw revolution: 160 rpm), but the blackening of the natural material filler was significant at a die part thereof. This made it impossible to pull a strand extruded therefrom continuously, thereby disabling the granulation.

## Claims

1. A method for producing a resin composition containing a resin and a natural material filler, the method comprising:
kneading the resin and the natural material filler,
wherein the kneading step is carried out in the presence of a boron compound so as to avoid blackening of the natural material filler.

2. The method according to claim 1, further comprising:
treating the natural material filler with the boron compound, the treating step being carried out before the kneading step.

3. The method according to claim 2, wherein
the treating step is an impregnating step for impregnating the natural material filler with a solution of the boron compound.

4. The method according to claim 3, further comprising:
drying and grinding the natural material filler, the drying and grinding step being carried out after the impregnating step.

5. The method according to claim 2, wherein
the treating step is:
an adhesion step for causing the boron compound to adhere to the natural material filler;
a coating step for coating the natural material filler with the boron compound; or
an adding and mixing step for adding the boron compound to the natural material filler and mixing the same.

6. The method according to any of claims 1 to 5, wherein
a kneading temperature in the kneading step is not lower than 100°C.

7. The method according to any of claims 1 to 6, wherein
a ratio of the boron compound is in a range of 0.1 part by weight to 500 parts by weight with respect to 100 parts by weight of the natural material filler.

8. The method according to any of claims 1 to 7, wherein
the boron compound is at least one selected from the group consisting of boric acids, borates, tetrahydroborates, tetrafluoroborates, cyanotrihydroborates, and boron oxides.

9. The method according claim 8, wherein
the boron compound is a combination of orthoboric acid and at least one selected from the group consisting of anhydrous sodium tetraborate, sodium tetraborate decahydrate (borax), and sodium metaborate tetrahydrate.

10. The method according to any of claims 1 to 9, wherein
the natural material filler is at least one selected from the group consisting of ground bamboo, ground tea leaves, ground *wasabi* horseradish, ground soybean residues, ground red pepper, ground black pepper, ground *matsutake* mushroom (pine mushroom), ground *shiitake* mushroom (Chinese mushroom), wood flour, ground paper, ground tea dregs, ground coffee residues, ground wood charcoal, ground bamboo charcoal, and ground cacao shells.

11. The method according to any of claims 1 to 10, wherein
the resin is a thermoplastic resin.

12. The method according to any of claims 1 to 11, wherein
the kneading step includes a substep of adding at least one substance selected from the group consisting of phosphoric acids, salts of phosphoric acids, silicon dioxides, and ceramics.

13. The method according to any of claims 1 to 12, further comprising:
molding the resin and the natural material filler.

14. A resin composition containing a natural material filler, obtainable by the method according to any of claims 1 to 13.

15. A molded product of a resin composition containing a natural material filler, obtainable by the method according to claim 13.

16. A blackening inhibitor for inhibiting blackening of a natural material filler, containing a boron compound.

17. The blackening inhibitor according to claim 16, wherein
the boron compound is at least one selected from the group consisting of boric acids, borates, tetrahydroborates, tetrafluoroborates, cyanotrihydroborates, and boron oxides.
